(19) Europäisches Patentamt
European Patent Office
Office européen des brevets

(11) **EP 2 485 303 A1**

(12) **EUROPEAN PATENT APPLICATION**
published in accordance with Art. 153(4) EPC

(43) Date of publication:
**08.08.2012 Bulletin 2012/32**

(51) Int Cl.:
*H01M 4/1391* (2010.01)       *H01M 4/131* (2010.01)
*H01M 4/505* (2010.01)       *H01M 4/525* (2010.01)
*H01M 4/62* (2006.01)

(21) Application number: **10818873.1**

(22) Date of filing: **24.09.2010**

(86) International application number:
**PCT/JP2010/066586**

(87) International publication number:
**WO 2011/037201 (31.03.2011 Gazette 2011/13)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **28.09.2009 JP 2009222134**

(71) Applicant: **Sumitomo Chemical Company Limited
Tokyo 104-8260 (JP)**

(72) Inventors:
• **YAMAGUCHI, Takitaro
  Ryugasaki-shi
  Ibaraki 301-0032 (JP)**
• **KAGEURA, Jun-ichi
  Tsukuba-shi
  Ibaraki 305-0812 (JP)**

(74) Representative: **Brunetti, Fabrizio et al
Cabinet Beau de Loménie
158, rue de l'Université
75340 Paris Cedex 07 (FR)**

(54) **POSITIVE ELECTRODE MIXTURE, POSITIVE ELECTRODE, AND NONAQUEOUS ELECTROLYTE SECONDARY BATTERY**

(57) Disclosed are: a positive electrode mixture which provides a nonaqueous electrolyte secondary battery that is capable of exhibiting high output at high current rate; and a positive electrode. Specifically disclosed is a positive electrode mixture which contains a positive electrode active material powder, a conductive agent, a binder and a solvent. The positive electrode active material powder is composed of particles having an average particle diameter of 0.05-1 $\mu$m (inclusive) and has a tap density of 0.8-3.0 g/cm$^3$. The amount of the conductive agent relative to 100 parts by weight of the positive electrode active material powder is 0.5-20 parts by weight; the amount of the binder relative to 100 parts by weight of the positive electrode active material powder is 0.5-10 parts by weight; and the amount of the solvent relative to 100 parts by weight of the positive electrode active material powder is 10-120 parts by weight. The positive electrode mixture has a viscosity of 1,000-25,000 mPa·s. Also specifically disclosed is a positive electrode which is obtained by applying the positive electrode mixture to a collector and drying the positive electrode mixture thereon.

**EP 2 485 303 A1**

**Description**

TECHNICAL FIELD

The present invention relates to a positive electrode mixture, a positive electrode and a nonaqueous electrolyte secondary battery.

BACKGROUND ART

A positive electrode mixture contains a positive electrode active material powder, an electrically conductive material, a binder and a solvent. A positive electrode is produced by applying a positive electrode mixture on a collector to obtain a coated collector, and then drying the coated collector. A positive electrode is used for a nonaqueous electrolyte secondary battery and the like. Among nonaqueous electrolyte secondary batteries, a lithium secondary battery is representative one, and is already practically used as a small power source for cellular phones, notebook computers and the like. Furthermore, its application as a medium or large power source for automobiles, electric power storages and the like is also being considered.

As a conventional positive electrode active material powder, Patent Document 1 discloses a positive electrode active material powder having an average particle diameter of 9.1 to 20.5 $\mu$m. A nonaqueous electrolyte secondary battery using a positive electrode, which is obtained by applying a positive electrode mixture containing the above-described powder on a collector, is not suitable for applications requiring high power output at high current rate, e.g. for, applications to automobile or power tool such as electric tool. This is because the internal resistance of such a positive electrode is large. On the other hand, as a powder for a positive electrode of a secondary battery capable of having high power output at a high current rate, Patent Document 2 describes in Examples a positive electrode active material powder having an average particle diameter of 1.4 $\mu$m or 1.6 $\mu$m.

RELATED ART

PATENT DOCUMENT

Patent Document 1: JP-11-40140-A
Patent Document 2: JP-2008-084826-A

SUMMARY OF THE INVENTION

PROBLEMS TO BE SOLVED BY THE INVENTION

It is expected that, when a positive electrode active material powder having a small particle diameter is appropriately used for secondary batteries, a secondary battery having a high power output is obtained. An object of the present invention is to provide a positive electrode mixture and a positive electrode, which can give a nonaqueous electrolyte secondary battery capable of having a higher power output at a high current rate.

MEANS TO SOLVE THE PROBLEMS

The present inventors focus on the fact that particles of a fine powder, such as particle of the positive electrode active material powder of Patent Document 2, are weakly aggregated with each other, and thereby are not easily mixed with an electrically conductive material. As a result of various investigations, the present inventors have achieved a positive electrode mixture capable of providing a positive electrode of a nonaqueous electrolyte secondary battery, which has a higher power output even though the particles of the positive electrode active material powder is a fine particle. Further, the present inventors have found that a nonaqueous electrolyte secondary battery using the positive electrode can have a higher power output at a high current rate.

The present invention provides the following means.

<1> A positive electrode mixture containing a positive electrode active material powder, an electrically conductive material, a binder and a solvent, wherein
the positive electrode active material powder is composed of particles having an average particle diameter of 0.05 to 1 $\mu$m,

the positive electrode active material powder has a tap density of 0.8 to 3.0 $g/cm^3$,
the amount of the electrically conductive material is from 0.5 to 20 parts by weight per 100 parts by weight of the positive electrode active material powder,
the amount of the binder is from 0.5 to 10 parts by weight per 100 parts by weight of the positive electrode active material powder,
the amount of the solvent is from 10 to 120 parts by weight per 100 parts by weight of the positive electrode active material powder, and
the viscosity is from 1,000 to 25,000 mPa·s.

<2> The positive electrode mixture as described in <1>, wherein the weight ratio of the positive electrode active material powder is from 77 to 99 wt% on the basis of the total weight of the positive electrode active material powder, the electrically conductive material and the binder.

<3> The positive electrode mixture as described in <1> or <2>, wherein the positive electrode active material powder has a BET specific surface area of 2 to 30 $m^2/g$.

<4> The positive electrode mixture as described in any one of <1> to <3>, wherein the positive electrode active material powder is composed of a lithium mixed metal oxide containing Ni and Mn.

<5> The positive electrode mixture as described in <4>, wherein the lithium mixed metal oxide is represented by the following formula (A):

$$Li_\alpha(Ni_{1-(x+y+z)}Mn_xFe_yCO_z)O_2 \qquad (A)$$

(wherein $0<x<1$, $0\leq y<1$, $0\leq z<1$, $0<x+y+z<1$, and $0.5\leq\alpha\leq1.5$).

<6> The positive electrode mixture as described in <5>, wherein y is in the range of more and not more than 0 to 0.2.

<7> The positive electrode mixture as described in any one of <1> to <6>, wherein the electrically conductive material is a carbonaceous material.

<8> The positive electrode mixture as described in any one of <1> to <7>, wherein the electrically conductive material has a bulk density of 0.01 to 1.3 $g/cm^3$.

<9> The positive electrode mixture as described in any one of <1> to <8>, wherein the binder has a glass transition temperature of -30°C to -40°C.

<10> The positive electrode mixture as described in any one of <1> to <9>, wherein the binder is composed of polyvinylidene fluoride.

<11> The positive electrode mixture as described in any one of <1> to <10>, wherein the weight ratio of the binder is from 1 to 20 wt% on the basis of the total weight of the binder and the solvent.

<12> The positive electrode mixture as described in any one of <1> to <11>, wherein the solvent has a density of 0.935 to 1.200 $g/cm^3$.

<13> A positive electrode produced by applying the positive electrode mixture described in any one of <1> to <12> on a collector to obtain a coated collector and then removing the solvent from the coated collector.

<14> A nonaqueous electrolyte secondary battery, having the positive electrode described in <13>.

EFFECTS OF THE INVENTION

According to the present invention, a nonaqueous electrolyte secondary battery having a higher power output at a high current rate than conventional lithium secondary batteries can be obtained. This secondary battery can be suitably used particularly for applications requiring a high power output at a high current rate, i.e. for applications requiring a large current and applications requiring rapid charging/discharging, such as for motor driving of an automobile, an electric tool or the like. Therefore, the present invention is very useful in industry.

MODE FOR CARRYING OUT THE INVENTION

<Positive Electrode Mixture>

The positive electrode mixture of the present invention contains a positive electrode active material powder, an electrically conductive material, a binder and a solvent. The positive electrode active material powder is composed of particles having an average particle diameter of 0.05 to 1 $\mu$m. The positive electrode active material powder has a tap density of 0.8 to 3.0 $g/cm^3$. The amount of the electrically conductive material is from 0.5 to 20 parts by weight per 100 parts by weight of the positive electrode active material powder. The amount of the binder is from 0.5 to 10 parts by weight per 100 parts by weight of the positive electrode active material powder. The amount of the solvent is from 10 to 120 parts by weight per 100 parts by weight of the positive electrode active material powder. The viscosity of the positive electrode mixture is from 1,000 to 25,000 mPa·s. The positive electrode mixture of the present invention is suitably used for a nonaqueous electrolyte secondary battery.

The viscosity is determined by examining the measurement object at a temperature of 25°C and a rotation speed of 10 rpm by the use of a rotating viscometer. The rotating viscometer includes a cone/plate viscometer manufactured by Brookfield.

(Average Particle Diameter)

The positive electrode active material powder is usually composed of primary particles and aggregate particles of primary particles. The average particle diameter of particles constituting the positive electrode active material powder is 0.05 $\mu$m or more, or 0.10 $\mu$m or more, and 1 $\mu$m or less, 0.7 $\mu$m or less, or 0.5 $\mu$m or less. The average particle diameter is the value of D50 determined by laser diffraction particle size distribution measurement. The apparatus for laser diffraction particle size distribution measurement includes the laser diffraction particle size distribution measuring apparatus (Model: Master Sizer 2000) manufactured by Malvern Instruments Ltd. If the average particle diameter of particles constituting the positive electrode active material powder is too small, a problem may occur in view of reactivity with the electrolytic solution. Also, if the average particle diameter is excessively large, a high power-output battery tends not to be obtained.

(Tap Density)

The tap density of the positive electrode active material powder is 0.8 $g/cm^3$ or more, 1.0 $g/cm^3$ or more, or 1.5 $g/cm^3$ or more, and 3.0 $g/cm^3$ or less. The tap density is determined by reading the total volume of particles and voids between particles after the positive electrode active material powder of a predetermined weight is charged into a measuring cylinder and tapped 200 times, and then dividing the weight of the positive electrode active material powder by the total volume. The tap density may be also determined by using Tap Denser KYT4000 manufactured by Seishin Enterprises Co., Ltd. If the tap density of the positive electrode active material powder is too small, the amount of the positive electrode active material per volume of the obtained positive electrode becomes small, and thereby the energy density of the positive electrode tends to decrease. The upper limit of the tap density is 3.0 $g/cm^3$.

(Viscosity)

The positive electrode mixture of the present invention contains the above-described positive electrode active material powder, an electrically conductive material, a binder and a solvent in a specific amount ratio, and has a viscosity of 1,000 Pa·s or more, 3,000 mPa·s or more, 5,000 mPa·s or more, or 8,000 mPa·s or more, and 25,000 mPa·s or less, or 20,000 mPa·s or less. When a positive electrode obtained using the positive electrode mixture of the present invention is used for a nonaqueous electrolyte secondary battery, a nonaqueous electrolyte secondary battery having a high power output at a high current rate, i.e. a battery superior in the power-output characteristics, can be obtained.

(Amount of Electrically Conductive Material)

The amount of the electrically conductive material per 100 parts by weight of the positive electrode active material powder is 0.5 parts by weight or more, 1 parts by weight or more, or 3 parts by weight or more, and 20 parts by weight or less, 15 parts by weight or less, or 20 parts by weight or less. If the amount of the electrically conductive material is too small, the electrical conductivity of the obtained positive electrode tends to decrease, whereas if the amount of the electrically conductive material is excessively large, the amount of the positive electrode active material per weight of the positive electrode becomes small, and thereby the energy density of the positive electrode tends to decrease.

(Amount of Binder)

The amount of the binder per 100 parts by weight of the positive electrode active material powder is 0.5 parts by weight or more, 1 part by weight or more, or 3 parts by weight or more, and 10 parts by weight or less. If the amount of the binder is too small, this is disadvantageous in view of adhesion of the positive electrode mixture to a collector, whereas if the amount of the binder is excessively large, the amount of the positive electrode active material per weight of the positive electrode becomes small, and the energy density of the positive electrode tends to decrease.

(Amount of Solvent)

The amount of the solvent per 100 parts by weight of the positive electrode active material powder is 10 parts by weight or more, or 20 parts by weight or more, and 120 parts by weight, or 100 parts by weight or less. If the amount of the solvent is too small, application to a collector tends to become difficult, whereas if the amount of the solvent is excessively large, drying after the application tends to become difficult.

(Amount of Positive Electrode Active Material Powder)

The weight ratio of the positive electrode active material powder is preferably 77 wt%, 80 wt%, or 90 wt%, and 99 wt% or less, or 95 wt% or less on the basis of the total weight of the positive electrode active material powder, the electrically conductive material and the binder. When the weight ratio of the positive electrode active material powder is in the above range, the obtained battery can be improved in discharge capacity and power-output characteristics.

(BET Specific Surface Area of Positive Electrode Active Material Powder)

The positive electrode active material powder preferably has a BET specific surface area of 2 to 30 $m^2$/g. When the BET specific surface area of the positive electrode active material powder is in the above range, the obtained battery can have an improved power-output characteristics, and a decreased reactivity with the later-described electrolytic solution.

<Positive Electrode Active Material Powder>

The positive electrode active material powder used in the present invention is described below in more detail. In order to obtain a nonaqueous electrolyte secondary battery that is environment-friendly regarding resources and has a high capacity, the positive electrode active material powder is preferably composed of a lithium mixed metal oxide containing Ni and Mn.

The lithium mixed metal oxide is preferably represented by the following formula (A):

$$Li_\alpha(Ni_{1-(x+y+z)}Mn_xFe_yCO_z)O_2 \qquad (A)$$

(wherein 0<x<1, 0≤y<1, 0≤z<1, 0<x+y+z<1, and 0.5≤α≤1.5).

In formula (A), considering difficulty in obtaining Co, z=0 is preferred. Even in the case where the positive electrode active material powder does not contain Co, the secondary battery can achieve a high discharge capacity. In this case, the lithium mixed metal oxide is represented by the following formula (B):

$$Li_\alpha(Ni_{1-(x+y)}Mn_xFe_y)O_2 \qquad (B)$$

(wherein 0<x<1, 0≤y<1, 0<x+y<1, and 0.5≤α≤1.5).

In formulae (A) and (B), the value of $\alpha$ is preferably from 0.95 to 1.5, more preferably from 1.0 to 1.4. The value of x+y is preferably from 0.2 to 0.7, more preferably from 0.3 to 0.6. The value of y is preferably from 0 to 0.2, more preferably more than 0 and not more than 0.2, still more preferably from 0.005 to 0.1.

With respect to formulae (A) and (B), in order to improve the cycle property of the nonaqueous electrolyte secondary battery, the amount (mol) of Mn in the lithium mixed metal oxide is preferably larger than the amount (mol) of Ni. That is, it is preferred to satisfy the requirement of 1-(x+y+z)<x in formula (A), and to satisfy the requirement of 1-(x+y)<x in formula (B).

In order to enhance the effects of the present invention, the lithium mixed metal oxide preferably has an α-NaFeO₂ type crystal structure, i.e. a crystal structure belonging to the space group R-3m. The crystal structure of the lithium mixed metal oxide can be identified from the powder X-ray diffraction pattern of the lithium mixed metal oxide, which is obtained by powder X-ray diffraction measurement using CuKα as the ray source.

A part of Li, Ni, Mn, Fe or Co in the lithium mixed metal oxide may be substituted by other elements. The other elements include an element selected from the group consisting of B, Al, Ga, In, Si, Ge, Sn, Mg, Sc, Y, Zr, Hf, Nb, Ta, Cr, Mo, W, Ru, Rh, Ir, Pd, Cu, Ag, Zn and the like.

A compound other than the lithium mixed metal oxide may be adhered to the surface of particles of the lithium mixed metal oxide. The compound can be a compound containing one or more elements selected from the group consisting of B, Al, Ga, In, Si, Ge, Sn, Mg and transition metal elements; preferably a compound containing one or more elements selected from the group consisting of B, Al, Mg, Ga, In and Sn; more preferably a compound of Al. Specifically, the compound is an oxide, a hydroxide, an oxyhydroxide, a carbonate, a nitrate or an organic acid salt of the above-described elements; preferably an oxide, a hydroxide or an oxyhydroxide of the above-described elements. These compounds may be mixed. Among these compounds, alumina is a particularly preferred compound. Also, heating may be performed after the adhesion.

\<Production Method of Positive Electrode Active Material Powder\>

The method for producing the positive electrode active material powder used in the present invention is specifically described below. As an example, the method for producing a lithium mixed metal oxide powder containing Ni and Mn is described.

The lithium mixed metal oxide powder containing Ni and Mn can be produced by calcining a mixture of a coprecipitate and a lithium compound at a temperature of 900°C or less. The coprecipitate can be obtained by bringing an aqueous solution containing Ni, Mn and Cl, and optionally Fe and Co (hereinafter, sometimes referred to as a "first aqueous solution") into contact with an alkali. At the contact, the coprecipitate may be obtained as a powder of the coprecipitate, but is preferably obtained as a coprecipitate slurry. The shape of the obtained coprecipitate depends on the concentrations of Ni, Mn, Fe and Co in the first aqueous solution, and the form of the alkali (aqueous solution or solid) to be brought into contact with the first aqueous solution. Incidentally, as regards the first aqueous solution, the alkali, the method for bringing the first aqueous solution into contact with the alkali, the method for mixing the lithium compound and the coprecipitate, the method for calcining the mixture, and the like, products or methods described later may be used.

In place of coprecipitation, mixing may be performed. In this case, the positive electrode active material powder can be produced by calcining a metal compound mixture. First, compounds containing the corresponding metal elements are weighed to give a prescribed composition, and mixed to obtain a metal compound mixture. Next, the metal compound mixture is calcined to produce a positive electrode active material powder. The method for producing a lithium mixed metal oxide powder as the positive electrode active material powder used in the present invention is preferably a method comprising a step of obtaining the above-described coprecipitate, because the target powder characteristics are easily obtained by the method.

The method for producing a lithium mixed metal oxide powder, which comprises a step of obtaining a coprecipitate, is described below. The method for producing a lithium mixed metal oxide powder preferably comprises the following steps (1), (2) and (3):

(1) bringing a first aqueous solution into contact with an alkali to obtain a coprecipitate slurry,
(2) obtaining a coprecipitate from the coprecipitate slurry, and
(3) calcining a mixture obtained by mixing the coprecipitate and a lithium compound at a temperature of 900°C or less, to obtain a lithium mixed metal oxide.

In the step (1), the first aqueous solution is preferably an aqueous solution obtained by using respective chlorides as respective raw materials containing Ni and Mn, and optionally Fe and Co; and dissolving, in water, a chloride of Ni and a chloride of Mn, and, optionally a chloride of Fe and a chloride of Co. The chloride of Fe is preferably a chloride of divalent Fe. In the case where respective materials are hardly soluble in water, e.g. in the case where these raw materials are an oxide, a hydroxide or a metal material, the first aqueous solution can be obtained by dissolving these raw materials in hydrochloric acid or an aqueous solution containing hydrochloric acid. The first aqueous solution contains Ni and Mn, and optionally Fe and Co, in the prescribed molar ratio, i.e. in the molar ratio of formula (A) or (B).

In the step (1), the alkali includes one or more compounds selected from the group consisting of LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate) and $(NH_4)_2CO_3$ (ammonium carbonate). These compounds may be an anhydride or a hydrate. In the step (1), such an alkali is preferably dissolved in water, and used as an aqueous alkali solution. The aqueous alkali solution also includes aqueous ammonia. The concentration of the alkali in the aqueous alkali solution is usually about 0.5 to 10 M, preferably about 1 to 8 M. In view of production cost, an anhydride and/or a hydrate of NaOH or KOH is preferably used as the alkali. Two or more of these alkalis may be used in combination.

Examples of the method for contact in the step (1) include a method of adding the aqueous alkali solution to the first aqueous solution, and mixing the obtained solution; a method of adding the first aqueous solution to the aqueous alkali solution, and mixing the obtained solution; and a method of adding the first aqueous solution and the aqueous alkali solution to water, and mixing the obtained solution. The mixing is preferably performed by stirring. Among the above methods for contact, the method of adding the first aqueous solution to the aqueous alkali solution and mixing the obtained solution is preferably used, because it is easy to keep the pH change stable. In this case, in the course of adding the first aqueous solution to the aqueous alkali solution and mixing the obtained solution, the pH of the mixed solution gradually decreases. The first aqueous solution may be added, while adjusting the pH of the mixed solution to 9 or more, preferably 10 or more. The first aqueous solution and the aqueous alkali solution are preferably brought into contact with each other, while keeping either one or both of these aqueous solutions at a temperature of 40 to 80°C. By the method, a coprecipitate having a more uniform composition can be obtained. In the step (1), a coprecipitate can be produced in this way to obtain a coprecipitate slurry.

In the step (2), a coprecipitate is obtained from the coprecipitate slurry. The step (2) may be performed by any method as long as a coprecipitate can be obtained. However, in view of operability, a solid-liquid separation method such as filtration is preferably used. The coprecipitate can be obtained also by a method of heating the coprecipitate slurry to volatilize the liquid, e.g. by spray drying method.

In the step (2), in the case of obtaining the coprecipitate by solid-liquid separation, the step (2) is preferably the following step (2') :

(2') obtaining a coprecipitate by performing solid-liquid separation of the coprecipitate slurry, and then washing and drying the obtained solid matter.

In the step (2'), when an alkali and Cl excessively exist in the solid matter obtained after solid-liquid separation, these can be removed by washing. In order to wash the solid matter efficiently, water is preferably used as the washing solution. In this connection, if desired, a water-soluble organic solvent such as alcohol and acetone may be added to the washing solution. Also, washing may be performed two or more times, and, for example, the solid matter may be washed with water, and thereafter, again washed with the water-soluble organic solvent as described above.

In the step (2'), the solid matter obtained by solid-liquid separation is washed and then dried to obtain a coprecipitate. Drying is usually performed by a heat treatment, and may be also performed by air blast drying, vacuum drying or the like. In the case where drying is performed by a heat treatment, the heat treatment temperature is usually from 50 to 300°C, preferably about 100°C to 200°C.

In the step (3), a mixture obtained by mixing the coprecipitate obtained above and a lithium compound is calcined to obtain a lithium mixed metal oxide powder, i.e. a positive electrode active material powder. The lithium compound includes one or more anhydrates and/or one or more hydrates, selected from the group consisting of lithium hydroxide, lithium chloride, lithium nitrate and lithium carbonate. The mixing may be either dry mixing or wet mixing, and dry mixing is preferred in view of simplicity and easiness. Examples of the mixing apparatus include a stirring mixer, a V-type mixer, a W-type mixer, a ribbon mixer, a drum mixer and a ball mill.

The temperature maintained during the calcination is an important factor from the standpoint of adjusting the average particle diameter of the lithium mixed metal oxide powder, i.e. the positive electrode active material powder. Usually, as the temperature maintained becomes higher, the average particle diameter tends to become larger. The temperature maintained is preferably from 650 to 900°C. The time for which the temperature is maintained is usually from 0.1 to 20 hours, preferably from 0.5 to 8 hours. The temperature rise rate to the temperature maintained is usually from 50 to 400°C/hour, and the temperature drop rate to room temperature from the temperature maintained is usually from 10 to 400°C/hour. The calcination atmosphere includes air, oxygen, nitrogen, argon, and a mixed gas thereof, and an air atmosphere is preferred.

At the calcination, the mixture may contain a reaction accelerator. Specific examples of the reaction accelerator include a chloride such as NaCl, KCl and $NH_4Cl$; a fluoride such as LiF, NaF, KF and $HN_4F$ (ammonium fluoride); and a boric acid. The chloride above is preferred, and KCl is more preferred. When the mixture contains a reaction accelerator, the reactivity of the mixture during calcination is enhanced, and the average particle diameter of the obtained lithium mixed metal oxide, i.e. the positive electrode active material powder, can be adjusted in some cases. Usually, assuming that the temperature maintained during calcination is the same, larger the content of the reaction accelerator in the mixture is, larger the average particle diameter tends to become. Two or more reaction accelerators may be used. The reaction accelerator may be added and mixed at the time of mixing the coprecipitate and the lithium compound. The reaction accelerator may remain in the lithium mixed metal oxide after calcination, or may be removed, for example, by washing the lithium mixed metal oxide after calcination or by evaporating the reaction accelerator itself.

The lithium mixed metal oxide powder, i.e. the positive electrode active material powder, obtained after calcination may be pulverized by a ball mill, a jet mill or the like. By the pulverization, the average particle diameter of the positive electrode active material powder can be adjusted in some cases. Pulverization and calcination may be repeated two or more times. Optionally, the positive electrode active material powder may be also washed or classified. In this way, a positive electrode active material powder can be obtained.

<Electrically Conductive material>

The electrically conductive material in the positive electrode mixture of the present invention is preferably a carbonaceous material. Examples of the carbonaceous material include graphite or a non-graphitic carbonaceous material. The carbonaceous material may be composed of a single component or mixed components. The bulk density of the electrically conductive material is preferably from 0.01 to 1.3 $g/cm^3$. The bulk density is determined by charging the electrically conductive material of a predetermined weight into a measuring cylinder, reading the total volume of particles and voids between particles without tapping the powder, and dividing the weight of the electrically conductive material by the total volume. The bulk density may be also determined by using Multi-Tester MT-1001 manufactured by Seishin Enterprises Co., Ltd. When the bulk density of the electrically conductive material is in the range above, the discharge capacity of the obtained secondary battery can be easily increased.

Specific examples of the graphite include graphite such as natural graphite and artificial graphite.

Examples of the non-graphitic carbonaceous material include carbon black and acetylene black. A fibrous carbonaceous material may be also used. Specific examples of the fibrous carbonaceous material include graphitized carbon fiber and carbon nanotube. The carbon nanotube may be either single-walled or multi-walled. A commercially available fibrous carbonaceous material may be appropriately pulverized and used. Pulverization may be either dry pulverization or wet pulverization. Dry pulverization includes pulverization by a ball mill, a rocking mill or a planetary ball mill; and wet pulverization includes pulverization by a ball mill or Dispermat.

<Binder>

The binder in the positive electrode mixture of the present invention includes a thermoplastic resin. Specific examples of the thermoplastic resin include a fluororesin such as polyvinylidene fluoride (hereinafter, sometimes referred to as PVdF), polytetrafluoroethylene (hereinafter, sometimes referred to as PTFE), ethylene tetrafluoride-propylene hexafluoride-vinylidene fluoride-based copolymer, propylene hexafluoride-vinylidene fluoride-based copolymer, and ethylene tetrafluoride-perfluorovinyl ether-based copolymer; and a polyolefin resin such as polyethylene and polypropylene. The binder is preferably polyvinylidene fluoride. Two or more of these binders may be mixed. A fluororesin and a polyolefin resin are preferred as the binder, and by such a binder, a positive electrode mixture having a better bonding property to a collector can be obtained. The binder may be used by dissolving or dispersing it in the later-described solvent.

The binder in the positive electrode mixture of the present invention preferably has a glass transition temperature of -30°C to -40°C. By using a binder having a glass transition temperature in the above range, flexibility of the electrode at room temperature is enhanced, and handleability of the electrode is improved.

<Solvent>

Examples of the solvent in the positive electrode mixture of the present invention include an amine-based solvent such as N,N-dimethylaminopropylamine, diethyltriamine and N,N-dimethylformamide (hereinafter, sometimes referred to as DMF); an ether-based solvent such as tetrahydrofuran; a ketone-based solvent such as methyl ethyl ketone; an ester-based solvent such as methyl acetate; an amide-based solvent such as dimethylacetamide and 1-methyl-2-pyrrolidone (hereinafter, sometimes referred to as NMP); and dimethylsulfoxide (hereinafter, sometimes referred to as DMSO).

Among these solvents, in view of operability, a solvent having a density of 0.935 to 1.200 $g/cm^3$ is preferred. Examples of such a solvent include diethylenetriamine (bp: from 199-209°C, Fp: 94°C, d: 0.955), N,N-dimethylformamide (bp: 153°C, Fp: 57°C, d: 0.944), dimethylacetamide (bp: 164.5-166°C, Fp: 70°C, d: 0.937), 1-methyl-2-pyrrolidone (bp: 204°C, Fp: 86°C, d: 1.028), and dimethylsulfoxide (bp: 189°C, Fp: 85°C, d: 1.101). "bp" indicates the boiling point, "Fp" indicates the flash point, and "d" indicates the specific gravity ($g/cm^3$).

<Production Method of Positive Electrode Mixture>

The method for producing the positive electrode mixture of the present invention is described below. The electrode mixture of the present invention can be produced by mixing/kneading the following positive electrode active material powder, electrically conductive material, binder and solvent by the later-described process:

the positive electrode active material powder is composed of particles having an average particle diameter of 0.05 to 1 $\mu$m and has a tap density of 0.8 to 3.0 $g/cm^3$,

the amount of the electrically conductive material is from 0.5 to 20 parts by weight per 100 parts by weight of the positive electrode active material powder,

the amount of the binder is from 0.5 to 10 parts by weight per 100 parts by weight of the positive electrode active material powder, and

the amount of the solvent is from 10 to 120 parts by weight per 100 parts by weight of the positive electrode active material powder.

First, the above positive electrode active material powder, electrically conductive material, binder and solvent are preliminarily mixed by a normal mixer to obtain a preliminarily mixed product. Next, the preliminarily mixed product is mixed/kneaded by a thin-film rotation-type high-speed stirrer, and thereby the positive electrode mixture of the present invention can be obtained. The thin-film rotation-type high-speed stirrer is provided with a cylindrical vessel, and a rotating wheel consisting of a cylindrical part which rotates near the inner surface of the vessel and has a plurality of holes formed therein. The preliminarily mixed product above is charged into the rotating wheel of the stirrer. In the stirrer, by the centrifugal force produced by the rotation of the rotating wheel, the preliminarily mixed product is forced toward the inner wall of the vessel through the plurality of holes, and then, between the rotating wheel and the inner wall of the vessel, is mixed/kneaded by the shearing force generated due to rotation of the rotating wheel.

In the preliminary mixing, the positive electrode active material powder, the electrically conductive material, the binder and the solvent may be mixed at once; or the binder, the positive electrode active material powder and the electrically conductive material may be mixed with the solvent in sequence. The order of mixing is not particularly limited. A mixture of the positive electrode active material powder and the electrically conductive material may be gradually added to the solvent. The solvent and the binder may be mixed before preliminary mixing. As described above, the preliminary mixing may be performed at once or in sequence.

The weight ratio of the binder is preferably from 1 to 20 wt% on the basis of the total weight of the binder and the solvent, in view of handleability.

<Positive Electrode>

The positive electrode can be produced by applying the positive electrode mixture on a collector to obtain a coated collector, and then removing the solvent from the coated collector. Removal of the solvent may be performed by drying. Examples of the collector (hereinafter, sometimes referred to as a positive electrode collector) include Al, Ni and stainless steel. In view of processability into a thin film and inexpensiveness, Al is preferred. After removing the solvent, the positive electrode may be pressed. Examples of the method for applying the positive electrode mixture on a collector include a die coating method, a screen coating method, a curtain coating method, a knife coating method, a gravure coating method and an electrostatic spraying method.

<Nonaqueous Electrolyte Secondary Battery>

The nonaqueous electrolyte secondary battery having the positive electrode above is described below. The nonaqueous electrolyte secondary battery has a positive electrode, a negative electrode and an electrolyte, and optionally a separator. Examples of the battery include a lithium secondary battery.
An electrode group is obtained by stacking or stacking and winding a separator, the above-described positive electrode, a separator and a negative electrode. The obtained electrode group is housed in a battery case such as battery can, and then an electrolytic solution composed of an organic solvent containing an electrolyte is injected into the case. Thus, the lithium secondary battery can be produced.

The shape of the electrode group includes, for example, a shape giving a circular, elliptical, rectangular or corner-rounded rectangular cross-sectional surface when the electrode group is cut in the direction perpendicular to the winding axis. The shape of the battery includes, for example, paper, coin, cylinder, rectangular and other shapes.

<Negative Electrode>

The negative electrode is sufficient if it can be doped and dedoped with lithium ions at a lower potential than the positive electrode, and includes an electrode obtained by loading a negative electrode mixture containing a negative electrode material on a negative electrode collector, and an electrode composed of a negative electrode material alone. The negative electrode material includes a carbonaceous material, a chalcogen compound (e.g., oxide, sulfide), a nitride, a metal or an alloy which can be doped and dedoped with lithium ions at a lower potential than the positive electrode. Also, two or more negative electrode materials may be mixed and used.

Examples of the negative electrode material are described below. Specific examples of the carbonaceous material include graphite such as natural graphite and artificial graphite, cokes, carbon black, pyrolytic carbons, carbon fiber, and calcined organic polymer compound. Specific examples of the oxide include a silicon oxide having the formula $SiO_x$ (wherein x is a positive real number), such as $SiO_2$ and $SiO$; a titanium oxide having the formula $TiO_x$ (wherein x is a positive real number), such as $TiO_2$ and $TiO$; a vanadium oxide having the formula $VO_x$ (wherein x is a positive real number), such as $V_2O_5$ and $VO_2$; an iron oxide having the formula $FeO_x$ (wherein x is a positive real number), such as $Fe_3O_4$, $Fe_2O_3$ and $FeO$; a tin oxide having the formula $SnO_x$ (wherein x is a positive real number), such as $SnO_2$ and $SnO$; a tungsten oxide having the formula $WO_x$ (wherein x is a positive real number), such as $WO_3$ and $WO_2$; and a mixed metal oxide containing lithium and titanium and/or vanadium, such as $Li_4Ti_5O_{12}$ and $LiVO_2$ (including $Li_{1.1}V_{0.9}O_2$). Specific examples of the sulfide include a titanium sulfide having the formula $TiS_x$ (wherein x is a positive real number), such as $Ti_2S_3$, $TiS_2$ and $TiS$; a vanadium sulfide having the formula $VS_x$ (wherein x is a positive real number), such as $V_3S_4$, $VS_2$ and $VS$; an iron sulfide having the formula $FeS_x$ (wherein x is a positive real number), such as $Fe_3S_4$, $FeS_2$ and $FeS$; a molybdenum sulfide having the formula $MoS_x$ (wherein x is a positive real number), such as $Mo_2S_3$ and $MoS_2$; a tin sulfide having the formula $SnS_x$ (wherein x is a positive real number), such as $SnS_2$ and $SnS$; a tungsten sulfide having the formula $WS_x$ (wherein x is a positive real number), such as $WS_2$; an antimony sulfide having the formula $SbS_x$ (wherein x is a positive real number), such as $Sb_2S_3$; and a selenium sulfide having the formula $SeS_x$

(wherein x is a positive real number), such as $Se_5S_3$, $SeS_2$ and $SeS$. The nitride includes, specifically, a lithium-containing nitride such as $Li_3N$ and $Li_{3-x}A_xN$ (wherein A is Ni and/or Co, and $0<x<3$). Two or more of these carbon materials, oxides, nitrides, sulfides and nitrides may be used in combination. These may be either crystalline or amorphous. Such a carbon material, oxide, sulfide or nitride is mainly loaded on a negative electrode collector to be used as an electrode.

The metal includes, specifically, a lithium metal, a silicon metal and a tin metal. The alloy includes a lithium alloy such as Li-Al, Li-Ni and Li-Si; a silicon alloy such as Si-zn; and a tin alloy such as Sn-Mn, Sn-Co, Sn-Ni, Sn-Cu and Sn-La. The metal alloy also includes an alloy such as $Cu_2Sb$ and $La_3Ni_2Sn_7$. Such a metal or alloy is mainly used alone as an electrode (e.g. used in the form of a foil).

Among these negative electrode materials, a carbonaceous material comprising graphite such as natural graphite and artificial graphite as the main component is preferably used in order to provide a battery having high potential flatness, low average discharge potential, good cycle performance and the like. The shape of the carbonaceous material may be any of, for example, a flake shape like that of natural graphite, a sphere shape like that of mesocarbon microbead, a fiber shape like that of graphitized carbon fiber, and an aggregate of fine powder.

The negative electrode mixture may contain a binder, if desired. The binder includes a thermoplastic resin, and specific examples thereof include polyvinylidene fluoride, thermoplastic polyimide, carboxymethyl cellulose (hereinafter, sometimes referred to as CMC), polyethylene, and polypropylene.

Examples of the negative electrode collector include Cu, Ni and stainless steel. In view of tendency of not alloying with lithium, easy processability into a thin film, and inexpensiveness, Cu may be used. The method for loading the negative electrode mixture on the negative electrode collector is the same as in the case of the positive electrode, and includes, for example, a method of using pressure forming, and a method of making a paste with use of a solvent or the like, applying the obtained paste on the negative electrode collector to obtain a coated collector, removing the solvent by drying, and then pressing to pressure-bond the coated collector.

<Separator>

For example, it is possible to use, as the separator, a member that is formed of a material such as polyolefin resin (e.g., polyethylene, polypropylene), fluororesin and nitrogen-containing aromatic polymer, and has a form such as porous film, nonwoven fabric and woven fabric. The separator can be composed of two or more of the materials above, or may be formed by stacking the materials. Examples of the separator include separators described in JP2000-30686A and JP10-324758A. In order to increase the volumetric energy density of the battery and to decrease the internal resistance, the thickness of the separator is preferably smaller as long as the mechanical strength can be maintained. The thickness is usually about 5 to 200 $\mu$m, preferably about 5 to 40 $\mu$m.

The separator preferably has a porous film containing a thermoplastic resin. In the nonaqueous electrolyte secondary battery, the separator is disposed between the positive electrode and the negative electrode. The separator preferably has a function of interrupting the electric current to block (shutdown) the flow of excessive electric current when an extraordinary electric current flows in the battery due to, for example, short circuit between the positive electrode and the negative electrode. The shutdown is implemented by clogging of micropores in the porous film of the separator when the temperature exceeds a normal use temperature. It is preferred that, even when the temperature in the battery elevates to a certain high temperature after the shutdown, the separator maintains the shutdown state without being ruptured by the temperature. Such a separator includes a laminate film in which a heat-resistant porous layer and a porous film are stacked with each other. By using this film as the separator, the heat resistance of the secondary battery can be increased. The heat-resistant porous layer may be stacked on both surfaces of the porous film.

The laminate film in which a heat-resistant porous layer and a porous film are stacked with each other is described below. In the laminate film, the heat-resistant porous layer is a layer having higher heat resistance than the porous film, and the heat-resistant porous layer may be formed of an inorganic powder or may contain a heat-resistant resin. When the heat-resistant porous layer contains a heat-resistant resin, the heat-resistant porous layer can be formed by an easy method such as coating. The heat-resistant resin includes polyamide, polyimide, polyamideimide, polycarbonate, polyacetal, polysulfone, polyphenylene sulfide, polyether ketone, aromatic polyester, polyethersulfone and polyetherimide. In order to increase the heat resistance, polyamide, polyimide, polyamideimide, polyethersulfone and polyetherimide are preferred; polyamide, polyimide and polyamideimide are more preferred; a nitrogen-containing aromatic polymer such as aromatic polyamide (para-oriented aromatic polyamide, meta-oriented aromatic polyamide), aromatic polyimide and aromatic polyamideimide is still more preferred; and an aromatic polyamide is yet still more preferred. Particularly, in view of productivity, a para-oriented aromatic polyamide (hereinafter, sometimes referred to as "para-aramid") is yet still more preferred. The heat-resistant resin also includes poly-4-methylpentene-1 and a cyclic olefin-based polymer. By using such a heat-resistant resin, the heat resistance of the laminate film, i.e. the thermal rupture temperature of the laminate film, can be more elevated. Among these heat-resistant resins, a nitrogen-containing aromatic polymer may have a good compatibility with the electrolytic solution due to polarity in its molecule. In this case, the retentivity of the electrolytic solution in the heat-resistant porous layer is enhanced. This enables a high injection rate of the electrolytic solution at the production of a nonaqueous electrolyte secondary battery, and a larger charge/discharge capacity of the nonaqueous electrolyte secondary battery.

The thermal rupture temperature of the laminate film depends on the kind of the heat-resistant resin, and is selected according to the conditions of use and the intended use. More specifically, the thermal rupture temperature can be controlled to about 400°C by using the nitrogen-containing aromatic polymer as the heat-resistant resin, to about 250°C by using poly-4-methylpentene-1, and to about 300°C by using a cyclic olefin-based polymer, respectively. In the case by using the heat-resistant porous layer is composed of an inorganic powder, it is also possible to control the thermal rupture temperature to, for example, 500°C or more.

The para-aramid above is obtained by condensation polymerization of a para-oriented aromatic diamine and a para-oriented aromatic dicarboxylic acid halide, and is substantially composed of a repeating unit in which an amide bond is bonded to the para-position or similar orientation position of the aromatic ring (e.g. an orientation position extending coaxially or parallelly in the opposite direction, as in the case of 4,4'-biphenylene, 1,5-naphthalene and 2,6-naphthalene). Specific examples thereof include a para-aramid having a structure of a para-orientation type or a quasi-para-orientation type, such as poly(para-phenyleneterephthalamide), poly(parabenzamide), poly(4,4'-benzanilideterephthalamide), poly(paraphenylene-4,4'-biphenylenedicarboxylic acid amide), poly(paraphenylene-2,6-naphthalenedicarboxylic acid amide), poly(2-chloro-paraphenyleneterephthalamide) and paraphenyleneterephthalamide/2,6-dichloroparaphenyleneterephthalamide copolymer.

The aromatic polyimide is preferably a wholly aromatic polyimide produced by condensation polymerization of an aromatic diacid anhydride and a diamine. Specific examples of the diacid anhydride include pyromellitic dianhydride, 3,3',4,4'-diphenylsulfonetetracarboxylic dianhydride, 3,3',4,4'-benzophenonetetracarboxylic dianhydride, 2,2'-bis(3,4-dicarboxyphenyl)hexafluoropropane and 3,3',4,4'-biphenyltetracarboxylic dianhydride. Specific examples of the diamine include oxydianiline, paraphenylenediamine, benzophenonediamine, 3,3'-methylenedianiline, 3,3'-diaminobenzophenone, 3,3'-diaminodiphenylsulfone and 1,5-naphthalenediamine. Also, a solvent-soluble polyimide can be suitably used. Examples of such a polyimide include a polyimide that is a polycondensate of 3,3',4,4'-diphenylsulfonetetracarboxylic dianhydride and an aromatic diamine.

The aromatic polyamideimide includes those obtained by condensation polymerization of an aromatic dicarboxylic acid and an aromatic diisocyanate, and those obtained by condensation polymerization of an aromatic diacid anhydride and an aromatic diisocyanate. Specific examples of the aromatic dicarboxylic acid include isophthalic acid and terephthalic acid. Specific examples of the aromatic diacid anhydride include trimellitic anhydride. Specific examples of the aromatic diisocyanate include 4,4'-diphenylmethane diisocyanate, 2,4-tolylene diisocyanate, 2,6-tolylene diisocyanate, ortho-tolylane diisocyanate, and m-xylene diisocyanate.

In order to increase ion permeability, the thickness of the heat-resistant porous layer is preferably small. Specifically, the thickness is preferably from 1 to 10 μm, more preferably from 1 to 5 μm, still more preferably from 1 to 4 μm. The heat-resistant porous layer has micropores, and the pore size (diameter) is usually 3 μm or less, preferably 1 μm or less. In the case where the heat-resistant porous layer contains a heat-resistant resin, the heat-resistant porous layer may further contain the later-described filler.

In the laminate film, the porous film has micropores, and preferably has a shutdown function. In this case, the porous film contains a thermoplastic resin. The pore size of the micropore in the porous film is usually 3 μm or less, preferably 1 μm or less. The porosity of the porous film is usually from 30 to 80 vol%, preferably from 40 to 70 vol%. In the nonaqueous electrolyte secondary battery, the porous film containing a thermoplastic resin can clog the micropores by softening of the thermoplastic resin constituting the film when use temperature exceeds the normal use temperature.

As the thermoplastic resin, a resin which is not dissolved in the electrolytic solution of the nonaqueous electrolyte secondary battery may be selected. Specifically, the resin includes a polyolefin resin such as polyethylene and polypropylene; and a thermoplastic polyurethane resin. A mixture of two or more of these resins may be also used. In order to cause softening and shutdown at a lower temperature, the porous film preferably contains polyethylene. Specific examples of the polyethylene include low-density polyethylene, high-density polyethylene and linear polyethylene, and also include ultrahigh molecular weight polyethylene having a molecular weight of 1,000,000 or more. In order to increase the puncture strength of the porous film, the thermoplastic resin constituting the film preferably contains an ultrahigh molecular weight polyethylene. In view of productivity of the porous film, it is sometimes preferred for the thermoplastic resin to contain a wax composed of a polyolefin having a low molecular weight (a weight average molecular weight of 10,000 or less).

The thickness of the porous film in the laminate film is usually from 3 to 30 μm, preferably from 3 to 25 μm, more preferably from 3 to 19 μm. In the present invention, the thickness of the laminate film is usually from 5 to 40 μm, preferably from 5 to 30 μm, more preferably from 5 to 20 μm. Assuming that the thickness of the heat-resistant porous layer is A (μm) and the thickness of the porous film is B (μm), the value of A/B is preferably from 0.1 to 1.

In the case where the heat-resistant porous layer contains a heat-resistant resin, the heat-resistant porous layer may contain one or more kinds of fillers. The filler may be one or more members selected from an organic powder, an inorganic powder and a mixture thereof. The average particle diameter of particles constituting the filler is preferably from 0.01 to 1 μm.

The organic powder includes, for example, a powder composed of an organic material. Examples of the organic material includes a homopolymer of a monomer or a copolymer of two or more kinds of monomers, such as styrene, vinyl ketone, acrylonitrile, methyl methacrylate, ethyl methacrylate, glycidyl methacrylate, glycidyl acrylate and methyl acrylate; a fluororesin such as polytetrafluoroethylene, tetrafluoroethylene-hexafluoropropylene copolymer, tetrafluoroethylene-ethylene copolymer, and polyvinylidene fluoride; a melamine resin; a urea resin; a polyolefin; and a polymethacrylate. One organic powder may be used alone, or a mixture of two or more kinds of organic powders may be used. Among these organic powders, a polytetrafluoroethylene powder is preferred in view of chemical stability.

The inorganic powder includes, for example, a powder composed of an inorganic material such as metal oxide, metal nitride, metal carbide, metal hydroxide, carbonate and sulfate. Among these, a powder composed of an inorganic material having low electrical conductivity is preferably used. Specific examples thereof include a powder composed of alumina, silica, titanium dioxide or calcium carbonate. One inorganic powder may be used alone, or a mixture of two or more inorganic powders may be used. Among these inorganic powders, an alumina powder is preferred in view of chemical stability. More preferably, all of the particles constituting the filler are alumina particles. Still more preferably, all of the particles constituting the filler are alumina particles, and a part or all of the particles are approximately spherical alumina particles. In the case where the heat-resistant porous layer is formed of an inorganic powder, the inorganic powder described above may be used, and optionally may be used by mixing it with a binder.

In the case where the heat-resistant porous layer contains a heat-resistant resin, the content of the filler varies depending on the specific gravity of the material of the filler. For example, when all of the particles constituting the filler are an alumina particle, assuming that the total weight of the heat-resistant porous layer is 100, the weight of the filler is usually from 5 to 95, preferably from 20 to 95, more preferably from 30 to 90. This range can be appropriately decided according to the specific gravity of the material of the filler.

The shape of filler includes, for example, an approximately spherical shape, a plate-like shape, a columnar shape, a needle-like shape, a whisker-like shape, and a fibrous. Although any of these particles may be used, an approximately spherical particle is preferred because uniform pores are easily formed. The approximately spherical particle includes a particle having an aspect ratio (long diameter of particle/short diameter of particle) of 1 to 1.5. The aspect ratio of the particle can be determined by an electron micrograph.

In view of ion permeability in the secondary battery, the air permeability by Gurley method of the separator is preferably from 50 to 300 sec/100 cc, more preferably from 50 to 200 sec/100 cc. The porosity of the separator is usually from 30 to 80 vol%, preferably from 40 to 70 vol%. The separator may be a separator formed by stacking separators having different porosities from each other.

<Electrolytic Solution>

In the secondary battery, the electrolytic solution is usually composed of an organic solvent containing an electrolyte. Examples of the electrolyte include a lithium salt such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (wherein BOB indicates bis(oxalato)borate), lower aliphatic lithium carboxylate, and $LiAlCl_4$. A mixture of two or more of these salts may also be used. Among these, one or more fluorine-containing lithium salts selected from the group consisting of $LiPF_6$, $LiAsF_6$, $LiSbF_6$, $LiBF_4$, $LiCF_3SO_3$, $LiN(SO_2CF_3)_2$ and $LiC(SO_2CF_3)_3$ are usually used.

Examples of the organic solvent which can be used in the electrolytic solution include carbonates such as propylene carbonate, ethylene carbonate (hereinafter, sometimes referred to as EC), dimethyl carbonate (hereinafter, sometimes referred to as DMC), diethyl carbonate, ethyl methyl carbonate (hereinafter, sometimes referred to as EMC), 4-trifluoromethyl-1,3-dioxolan-2-one and 1,2-di(methoxycarbonyloxy)ethane; ethers such as 1,2-dimethoxyethane, 1,3-dimethoxypropane, pentafluoropropylmethyl ether, 2,2,3,3-tetrafluoropropyldifluoromethyl ether, terahydrofuran and 2-methyltetrahydrofuran; esters such as methyl formate, methyl acetate and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethylsulfoxide and 1,3-propanesultone; and a solvent obtained by further introducing a fluorine substituent into the organic solvent above. Usually, a mixed solvent prepared by mixing two or more of these organic solvent is used. Among all, a mixed solvent containing carbonates is preferred, and a mixed solvent of a cyclic carbonate and an acyclic carbonate, or a mixed solvent of a cyclic carbonate and ethers is more preferred. The mixed solvent of a cyclic carbonate and an acyclic carbonate is preferably a mixed solvent containing EC, DMC and EMC, because it has a wide operating temperature range and an excellent load characteristics, and hardly decomposes even when a graphite material such as natural graphite and artificial graphite is used as the negative electrode active material. In particular, in order to enhance the safety, an electrolytic solution containing a fluorine-containing lithium salt such as $LiPF_6$ in an organic solvent having a fluorine constituent is preferably used. A mixed solvent containing DMC and fluorine substituent-containing ethers such as pentafluoropropylmethyl ether and 2,2,3,3-tetrafluoropropyldifluoromethyl ether is excellent also in the large current discharge characteristics, and is more preferred.

<Solid Electrolyte>

A solid electrolyte may also be used in place of the electrolytic solution above. The solid electrolyte which can be used includes, for example, an organic polymer electrolyte such as polyethylene oxide-based polymer or polymer containing at least one or more of a polyorganosiloxane chain and a polyoxyalkylene chain. A so-called gel type electrolyte, which comprises an electrolytic solution held in a polymer, may also be used. An inorganic solid electrolyte containing a sulfide, such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$ and $Li_2S$-$SiS_2$-$Li_2SO_4$ may be also used. Use of such a solid electrolyte can enhance the safety in some cases. When a solid electrolyte is used in the nonaqueous electrolyte secondary battery of the present invention, the solid electrolyte sometimes plays the role of a separator, and in such a case, a separator may not be required.

EXAMPLES

The present invention is described in greater detail below by referring to Examples. The measurement of particle size distribution, the measurement of BET specific surface area and powder X-ray diffraction measurement of the powders were performed by the following methods.

(1) Measurement of Average Particle Diameter of Positive Electrode Active Material Powder

D50 ($\mu$m) of the positive electrode active material powder was measured using a laser diffraction particle size distribution measuring apparatus (Model: Master Sizer 2000, manufactured by Malvern Instruments Ltd.), and the obtained value was taken as the average particle diameter.

(2) Measurement of Average Particle Diameter of Graphite Powder

D50 ($\mu$m) of the graphite powder was measured using a laser diffraction particle size distribution measuring apparatus (Model: Master Sizer 2000, manufactured by Malvern Instruments Ltd.), and the obtained value was taken as the average particle diameter.

(3) Measurement of BET Specific Surface Area

After drying 1 g of the powder at 150°C for 15 minutes in a nitrogen stream, the BET specific surface area of the powder was measured using FlowSorb II2300 manufactured by Micromeritics Instrument Corporation.

(4) Powder X-Ray Diffraction Measurement of Positive Electrode Active Material Powder

The powder X-ray diffraction measurement of the positive electrode active material powder was performed using a powder X-ray diffraction measuring apparatus (Model RINT 2500TTR, manufactured by Rigaku Corporation). The powder was filled in a special substrate, and then measured in the range of diffraction angle $2\theta$ = 10° to 90° by using a CuK$\alpha$ ray source to obtain a powder X-ray diffraction pattern. The crystal structure of the positive electrode active material powder was identified by the powder X-ray diffraction pattern.

Example 1:

(Production of Positive Electrode)

A positive electrode active material powder having an average particle diameter of 0.2 $\mu$m and a tap density of 1.8 g/cm$^3$ was used. The positive electrode active material powder was composed of a lithium mixed metal oxide represented by the formula $Li_{1.3}(Ni_{0.41}Mn_{0.49}Fe_{0.10})O_2$, and the lithium mixed metal oxide had an $\alpha$-$NaFeO_2$ type crystal structure.
As the electrically conductive material, a non-graphitic carbonaceous material having an average particle diameter of 0.05 $\mu$m (acetylene black, produced by Denki Kagaku Kogyo Kabushiki Kaisha, trade name: Denka Black HS100) was used. The bulk density of this carbonaceous material was 0.15 g/cm$^3$.
As the binder, PVdF was used.
As the solvent, NMP was used.
As the collector (positive electrode collector), an Al foil having a thickness of 20 $\mu$m was used.

50 Parts by weight of a solution comprising 10 wt% of PVdF and 90 wt% of NMP, and 55 parts by weight of NMP were charged into a 200 ml-volume SUS-made wide-mouth container and mixed with each other. Furthermore, 100 parts by weight of the positive electrode active material powder, and 5 parts by weight of the non-graphitic carbonaceous material were charged into the container, and the obtained mixture was preliminarily mixed to obtain a preliminarily mixed product. As the preliminarily mixing apparatus, Dispermat (manufactured by VMA-GETZMANN GMBH, trade name: DISPERMAT CN10F2) was used. The viscosity of the preliminarily mixed product was 28,000 mPa·s.

Using a thin-film rotation-type high-speed stirrer, 90 ml of the preliminarily mixed product was mixed and kneaded to obtain a positive electrode mixture. As the thin-film rotation-type high-speed stirrer, T.K. FILMIX Model 56-50 manufactured by PRIMIX Corporation was used. The rotation conditions of the rotating wheel were set to a circumferential velocity of 35 m/s and 30 seconds. The viscosity of the obtained positive electrode mixture was 12,000 mPa·s.

This positive electrode mixture was applied on both surfaces of an aluminum foil having a thickness of 15 $\mu$m to obtain a coated collector, and the solvent was removed by drying the coated collector, whereby a positive electrode was produced. The applied amount of the positive electrode mixture component per one surface of the alumina foil after drying was 16.5 mg/cm$^2$. The collector was pressed by a roll press, and an aluminum-made conductor was welded thereto.

(Production of Negative Electrode)

As the negative electrode active material, natural graphite and artificial graphite were used. As the binder, CMC was used. These were weighed to give a weight ratio of natural graphite : artificial graphite : binder of 58.8:39.2:2, and mixed and kneaded in water as the solvent to obtain a negative electrode mixture paste. For the mixing and kneading, Dispermat (manufactured by VMA-GETZMANN GMBH, trade name: DISPERMAT CN10F2) was used. At the mixing and kneading, an appropriate amount of water was added so that the paste could have a viscosity of 1,000 to 3,000 mPa·s.

This negative electrode mixture was applied on both surfaces of a copper foil having a thickness of 10 $\mu$m to obtain a coated collector, and the solvent was removed by drying the coated collector, whereby a negative electrode was produced. The applied amount of the negative electrode mixture component per one surface of the copper foil after drying was 7.5 mg/cm$^2$. The collector was pressed by a roll press, and a copper-made lead was welded thereto.

As the organic solvent of the electrolytic solution, EC, DMC and EMC were used. These were mixed in a volume ratio of EC:DMC:EMC = 16:10:74 to obtain a mixed solvent. As the electrolyte, LiPF$_6$ was used. The electrolyte was added to the mixed solvent to a concentration of 1.3 mol/liter, and dissolved in the mixed solvent to prepare an electrolytic solution.

(Production of Nonaqueous Electrolyte Secondary Battery)

As the separator, a polypropylene-made porous film was used. The above positive electrode, separator, negative electrode and separator were stacked in this order, and wound in a spiral form to produce an electrode group. The electrode group had a battery size of 62 mm in length, 35 mm in width and 3.6 mm in thickness. The electrode group was inserted into a battery case made of an aluminum laminate. The electrolytic solution in a prescribed amount was injected into the battery case having the battery group inserted thereinto. Thus, a nonaqueous electrolyte secondary battery with an intended capacity of 600 mAh was produced. The intended capacity of 600 mAh means that the battery is designed to have a discharge capacity of 600 mAh at the discharge rate of 0.2C.

Comparative Example 1:

A positive electrode mixture was produced in the same manner as in Example 1 except that an LiCoO$_2$ powder having a tap density of 2.0 g/cm$^3$ and an average particle diameter of 3.0 $\mu$m (produced by Nippon Kayaku Co., Ltd., trade name: CELLSEED) was used as the positive electrode active material powder. The viscosity of this positive electrode mixture was 2,000 mPa·s.

A positive electrode was obtained in the same manner as in Example 1 by using the positive electrode mixture obtained above, and a nonaqueous electrolyte secondary battery having an intended capacity of 600 mAh was produced in the same manner as in Example 1.

Comparative Example 2:

A nonaqueous electrolyte secondary battery having an intended capacity of 600 mAh was produced in the same manner as in Example 1 except that the preliminarily mixed produce in Example 1 was directly used as the positive electrode mixture.

(Evaluation of Nonaqueous Electrolyte Secondary Battery)

Using each of the nonaqueous electrolyte secondary batteries obtained in Example 1 and Comparative Examples 1 and 2, a discharge rate test was performed under the following conditions. The discharge rate test is a test for measuring the discharge capacity by varying the discharge current during discharging, and the discharge capacity maintenance ratio was calculated according to the formula shown below.

<Discharge Rate Test>

Test temperature: 25°C

Charging: Maximum charge voltage of 4.2 V and charge time of 4 hours (1C)
Discharging: The minimum discharge voltage was set to a constant value of 2.5 V, and the discharge current in each cycle was changed as follows. A high discharge capacity at the discharge rate of 5C and 10C (i.e. at a high current rate) means a high power output at a high current rate.
Discharge at 1st and 2nd cycles: 0.2C
Discharge at 3rd cycle: 1C
Discharge at 4th cycle: 5C
Discharge at 5th cycle: 10C

<Discharge Capacity Maintenance Ratio>

Discharge capacity maintenance ratio (%) = discharge capacity in each cycle (at each discharge rate)/discharge capacity in 2nd cycle (0.2C rate) $\times$ 100

Characteristics of Battery of Example 1:

The discharge capacity maintenance ratio of the nonaqueous electrolyte secondary battery of Example 1 was calculated by the evaluation above. As a result, the discharge capacity maintenance ratio at 1C was 95%, the discharge capacity maintenance ratio at 5C was 90%, and the discharge capacity maintenance ratio at 10C was 88%.

Characteristics of Battery of Comparative Example 1:

The discharge capacity maintenance ratio of the nonaqueous electrolyte secondary battery of Comparative Example 1 was calculated by the evaluation above. As a result, the discharge capacity maintenance ratio at 1C was 95%, the discharge capacity maintenance ratio at 5C was 50%, and the discharge capacity maintenance ratio at 10C was 1%.

Characteristics of Battery of Comparative Example 2:

The discharge capacity maintenance ratio of the nonaqueous electrolyte secondary battery of Comparative Example 2 was calculated by the evaluation above. As a result, the discharge capacity maintenance ratio at 1C was 90%, the discharge capacity maintenance ratio at 5C was 60%, and the discharge capacity maintenance ratio at 10C was 30%.
These evaluation results of the secondary battery reveal that the nonaqueous electrolyte secondary battery of Example 1 of the present invention is superior in the power input and output characteristics at a high current rate, compared with the nonaqueous electrolyte secondary batteries of Comparative Examples 1 and 2.

Production Example 1 (Production of Laminate Film):

(1) Production of Coating Fluid

After dissolving 272.7 g of calcium chloride in 4,200 g of NMP, 132.9 g of paraphenylenediamine was added thereto and completely dissolved. To the obtained solution, 243.3 g of terephthalic acid dichloride was gradually added to effect polymerization and thereby obtain a para-aramid, and the para-aramid was further diluted with NMP to obtain Para-Aramid Solution (A) having a concentration of 2.0 wt%. To 100 g of the obtained para-aramid solution, 2 g of an alumina powder (a) (produced by Nippon Aerosil Co., Ltd., Alumina C, average particle diameter: 0.02 $\mu$m) and 2 g of an alumina powder (b) (Sumicorandom AA03, produced by Sumitomo Chemical Co., Ltd., average particle diameter:

0.3 $\mu$m) were added as the filler in a total amount of 4 g and mixed. The resulted mixture was treated three times by a nanomizer, further filtrated through a 1,000-mesh metal screen and defoamed under reduced pressure to produce Coating Fluid (B). The weight of the alumina powders (filler) was 67 wt% on the basis of the total weight of the para-aramid and the alumina powders.

(2) Production and Evaluation of Laminate Film

As the porous film, a polyethylene-made porous film (thickness: 12 $\mu$m, air permeability: 140 sec/100 cc, average pore size: 0.1 $\mu$m, porosity: 50%) was used. On a PET film having a thickness of 100 $\mu$m, the polyethylene-made porous film above was fixed, and Coating Fluid (B) was applied on the porous film by a bar coater manufactured by Tester Sangyo Co., Ltd. The PET film and the coated porous film, while being kept in the combined state, were dipped in water to precipitate a para-aramid porous film (heat-resistant porous layer), and then, the solvent was dried to obtain Laminate Film 1 in which the heat-resistant porous layer and the porous film were stacked with each other. The thickness of the laminate film 1 was 16 $\mu$m, and the thickness of the para-aramid porous film (heat-resistant porous layer) was 4 $\mu$m. The air permeability of Laminate Film 1 was 180 sec/100 cc, and the porosity thereof was 50%. The cross section of the heat-resistant porous layer in Laminate Film 1 was observed by a scanning electron microscope (SEM), as a result, it was found that relatively small micropores of approximately from 0.03 to 0.06 $\mu$m and relatively large micropores of approximately from 0.1 to 1 $\mu$m were present. Evaluations of the laminate film were performed by the following methods.

<Evaluation of Laminate Film>

(A) Measurement of Thickness

The thickness of the laminate film and the thickness of the porous film were measured in accordance with JIS Standards (K7130-1992). Also, as the thickness of the heat-resistant porous layer, a value obtained by subtracting the thickness of the porous film from the thickness of the laminate film was used.

(B) Measurement of Air Permeability by Gurley Method

The air permeability of the laminate film was measured by a digital timer-type Gurley densometer manufactured by Yasuda Seiki Seisakusho Ltd., in accordance with JIS P8117.

(C) Porosity

The sample of the obtained laminate film was cut into a square having a one-side length of 10 cm and measured for the weight W (g) and the thickness D (cm). The weight (Wi (g)) of each layer in the sample was determined and after determining the volume of each layer from Wi and the true specific gravity (true specific gravity i (g/cm$^3$)) of the material of each layer, the porosity (vol%) was calculated according to the following formula.

$$\text{Porosity (vol\%)} = 100 \times \{1 - (W1/\text{true specific gravity } 1 + W2/\text{true specific gravity } 2 + \ldots + Wn/\text{true specific gravity } n)/(10 \times 10 \times D)\}$$

In each of Examples, a nonaqueous electrolyte secondary battery capable of more elevating the thermal rupture temperature can be obtained by using the laminate film obtained in Production Example 1.

**Claims**

1. A positive electrode mixture containing a positive electrode active material powder, an electrically conductive material, a binder and a solvent, wherein
   the positive electrode active material powder is composed of particles having an average particle diameter of 0.05 to 1 $\mu$m,
   the positive electrode active material powder has a tap density of 0.8 to 3.0 g/cm$^3$,
   the amount of the electrically conductive material is from 0.5 to 20 parts by weight per 100 parts by weight of the positive electrode active material powder,

the amount of the binder is from 0.5 to 10 parts by weight per 100 parts by weight of the positive electrode active material powder,

the amount of the solvent is from 10 to 120 parts by weight per 100 parts by weight of the positive electrode active material powder, and

the viscosity is from 1,000 to 25,000 mPa·s.

2. The positive electrode mixture according to claim 1, wherein the weight ratio of the positive electrode active material powder is from 77 to 99 wt% on the basis of the total weight of the positive electrode active material powder, the electrically conductive material and the binder.

3. The positive electrode mixture according to claim 1 or 2, wherein the positive electrode active material powder has a BET specific surface area of 2 to 30 $m^2$/g.

4. The positive electrode mixture according to any one of claims 1 to 3, wherein the positive electrode active material powder is composed of a lithium mixed metal oxide containing Ni and Mn.

5. The positive electrode mixture according to claim 4, wherein the lithium mixed metal oxide is represented by the following formula (A):

$$Li_{\alpha}(Ni_{1-(x+y+z)}Mn_xFe_yCO_z)O_2 \qquad (A)$$

(wherein $0<x<1$, $0\leq y<1$, $0\leq z<1$, $0<x+y+z<1$, and $0.5\leq\alpha\leq1.5$).

6. The positive electrode mixture according to claim 5, wherein y is in the range of more than 0 and not more than 0.2.

7. The positive electrode mixture according to any one of claims 1 to 6, wherein the electrically conductive material is a carbonaceous material.

8. The positive electrode mixture according to any one of claims 1 to 7, wherein the electrically conductive material has a bulk density of 0.01 to 1.3 $g/cm^3$.

9. The positive electrode mixture according to any one of claims 1 to 8, wherein the binder has a glass transition temperature of -30°C to -40°C.

10. The positive electrode mixture according to any one of claims 1 to 9, wherein the binder is composed of polyvinylidene fluoride.

11. The positive electrode mixture according to any one of claims 1 to 10, wherein the weight ratio of the binder is from 1 to 20 wt% on the basis of the total weight of the binder and the solvent.

12. The positive electrode mixture according to any one of claims 1 to 11, wherein the solvent has a density of 0.935 to 1.200 $g/cm^3$.

13. A positive electrode produced by applying the positive electrode mixture according to any one of claims 1 to 12 on a collector to obtain a coated collector and then removing the solvent from the coated collector.

14. A nonaqueous electrolyte secondary battery having the positive electrode according to claim 13.

**INTERNATIONAL SEARCH REPORT**

| International application No. |
| --- |
| PCT/JP2010/066586 |

A.  CLASSIFICATION OF SUBJECT MATTER
*H01M4/1391*(2010.01)i, *H01M4/131*(2010.01)i, *H01M4/505*(2010.01)i, *H01M4/525*
(2010.01)i, *H01M4/62*(2006.01)i

According to International Patent Classification (IPC) or to both national classification and IPC

B.  FIELDS SEARCHED

Minimum documentation searched (classification system followed by classification symbols)
H01M4/1391, H01M4/131, H01M4/505, H01M4/525, H01M4/62

Documentation searched other than minimum documentation to the extent that such documents are included in the fields searched
Jitsuyo Shinan Koho         1922-1996   Jitsuyo Shinan Toroku Koho   1996-2010
Kokai Jitsuyo Shinan Koho   1971-2010   Toroku Jitsuyo Shinan Koho   1994-2010

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2008-117541 A  (Toshiba Corp.), 22 May 2008 (22.05.2008), claims; paragraphs [0032] to [0043]; examples & US 2008/0102196 A1     & KR 10-2008-0039286 A & CN 101174686 A          & KR 10-2010-0071950 A | 1-14 |
| Y | JP 2008-269890 A  (Nissan Motor Co., Ltd.), 06 November 2008 (06.11.2008), paragraphs [0050], [0128] to [0132] (Family: none) | 1-14 |
| Y | JP 10-312792 A  (Toyota Central Research and Development Laboratories, Inc.), 24 November 1998 (24.11.1998), examples; paragraphs [0018], [0036] to [0039] (Family: none) | 1-4,7-14 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 November, 2010 (30.11.10) | 07 December, 2010 (07.12.10) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2010/066586 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2006-278303 A  (Nippon Zeon Co., Ltd.),<br>12 October 2006 (12.10.2006),<br>paragraphs [0050] to [0057]; examples<br>(Family: none) | 1-14 |
| Y | JP 2005-50582 A  (Mitsubishi Chemical Corp.),<br>24 February 2005 (24.02.2005),<br>paragraph [0024]<br>(Family: none) | 1-14 |
| Y | WO 98/05083 A1  (Sony Corp.),<br>05 February 1998 (05.02.1998),<br>abstract; claims; examples<br>& JP 4161376 B          & US 2001/0014422 A1<br>& US 2004/0072077 A1    & EP 871233 A1<br>& DE 69701126 D          & CA 2233128 A | 8-14 |
| Y | JP 2006-172887 A  (Nissan Motor Co., Ltd.),<br>29 June 2006 (29.06.2006),<br>claims; paragraphs [0003], [0011] to [0015];<br>examples<br>(Family: none) | 1-8,11-14 |
| Y | JP 2006-92808 A  (Nissan Motor Co., Ltd.),<br>06 April 2006 (06.04.2006),<br>paragraph [0015]<br>(Family: none) | 1-8,11-14 |
| A | JP 2006-253450 A  (Nisshinbo Industries, Inc.),<br>21 September 2006 (21.09.2006),<br>paragraph [0038]<br>(Family: none) | 9,10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11040140 A
- JP 2008084826 A
- JP 2000030686 A
- JP 10324758 A